(19) Europäisches Patentamt

European Patent Office

Office européen des brevets

(11) **EP 1 107 819 B1**

(12) **EUROPEAN PATENT SPECIFICATION**

(45) Date of publication and mention
of the grant of the patent:
**12.02.2003 Bulletin 2003/07**

(51) Int Cl.$^7$: **B01D 53/60**, B01D 53/84

(21) Application number: **99934687.7**

(22) Date of filing: **12.07.1999**

(86) International application number:
**PCT/EP99/04941**

(87) International publication number:
**WO 00/002646 (20.01.2000 Gazette 2000/03)**

(54) **METHOD FOR CLEANING A WASTE GAS**

VERFAHREN ZUR REINIGUNG EINES ABGASES

PROCEDE DE NETTOYAGE D'UN GAZ DE COMBUSTION

(84) Designated Contracting States:
**AT BE CH CY DE DK ES FI FR GB GR IE IT LI LU MC NL PT SE**

(30) Priority: **10.07.1998 NL 1009612**

(43) Date of publication of application:
**20.06.2001 Bulletin 2001/25**

(73) Proprietor: **BIOSTAR DEVELOPMENT C.V.**
**8560 BA Balk (NL)**

(72) Inventor: **VERBRAAK, Petrus, Leonardus**
**NL-1383 GJ Weesp (NL)**

(74) Representative: **Jorritsma, Ruurd**
**Nederlandsch Octrooibureau**
**Scheveningseweg 82**
**P.O. Box 29720**
**2502 LS Den Haag (NL)**

(56) References cited:
| | |
|---|---|
| **EP-A- 0 176 658** | **EP-A- 0 326 457** |
| **EP-A- 0 531 726** | **WO-A-86/06981** |
| **WO-A-93/03825** | **WO-A-94/20676** |
| **WO-A-96/24434** | |

# EP 1 107 819 B1

## Description

The invention relates to a method for removing gaseous components from a gas, which involves the gas being brought into contact with a scrub liquor in a scrubber. A method of this type is known in practice. It is known, for example, to scrub sulphur oxides as a gaseous component from a gas by causing the gas to rise in a scrubber, the gas being brought into contact with scrub liquor in the form of a limestone-containing slurry which rains down from spray bars in the scrubber. The limestone reacts with the sulphur oxide, in particular sulphur dioxide to form a calcium sulphite which remains on the bottom of the scrubber and is oxidized further, inside or outside the scrubber, to calcium sulphate which is mainly used in construction.

The above-described method, also known as the limestone/gypsum process, removes sulphur dioxide to a sufficient extent to allow generally accepted emission requirements to be met.

In general, a waste gas such as the flue gas from a boiler fired with fossil fuel will, however, also contain other compounds which adversely affect the environment and which even now, but certainly within a foreseeable time, will have to be removed from the flue gas, at least to a considerable degree, before the flue gas is allowed to be discharged into the environment. One of the most important groups of compounds which are present in a waste gas and will have to be removed therefrom are the nitrogen oxides, also referred to as $NO_x$.

A known method for removing nitrogen oxides from a gas is so-called selective catalytic reduction, also referred to as SCR. This involves the gas, which is admixed with ammonia, being passed over a catalyst at elevated temperature, the nitrogen oxides being converted into nitrogen and water in the process. The SCR process has the drawback that both investment costs and operational costs are high. Furthermore, an apparatus for carrying out the SCR process, for example at power stations, is very bulky and especially for that reason less suitable for retrofitting existing limestone/gypsum installations at those locations where the emission of nitrogen oxides must meet certain conditions.

The document WO-A-9624434 describes a process for removal of sulphur and nitrogen oxides from a gas, comprising scrubbing the gas with a scrubbing liquid comprising a metal chelate and a biomass.

A first object of the invention is to provide a method for cleaning a gas, the method requiring low investment and having low operational costs. Another object of the invention is to provide a method which can be implemented, by means of relatively simple adaptations, in an existing apparatus for cleaning a gas. A further object of the invention is to provide a method which can be implemented using an apparatus which occupies but little space.

Yet another object of the invention is to provide a method whose implementation requires only such adaptations on existing apparatuses as occupy little space.

These objects and advantages as described hereinafter are achieved by means of a method according to claim 1.

Using the method according to the invention, both sulphur oxides and nitrogen oxides are largely removed from the gas in the same scrubber by scrubbing the gas with the scrub liquor containing suitably chosen agents. Only a single scrubber, a single blower system for transporting the gas and a single recirculation pump system for the scrub liquor need be procured, therefore. Apart from savings in investment costs, this also permits savings in the space occupied by the installation for implementing the method according to the invention.

Denitrification therefore takes place at a sulphate and sulphite level which is relatively high compared with that in the known method. The removal efficiency of the nitrogen oxides in standard waste gases of fossil-fuel fired boilers with non-low-$No_x$ burners is more than 80%.

In existing wet gas desulphurization apparatuses, the method is feasible with only relatively small modifications to the apparatus. The method according to the invention is therefore also, in particular, suitable for use at locations where a gas desulphurization apparatus is already present.

An advantage of the method according to the invention is that operational costs can be kept low. After all, the gas has to be pumped through just a single scrubber, and the scrub liquor too has to be recirculated within only one scrubber. This allows savings in energy consumption, compared with the energy consumption when separate cleaning steps are carried out for each of the components to be removed from the gas.

According to the invention the scrub liquor is provided with agents for removing from the gas most of the sulphur oxides present in the gas as well as most of the nitrogen oxides present in the gas. A quantity of biomass is sustained in the scrubber, preferably on the bottom of the scrubber, so that the scrubber is also a bioreactor. It was found that a suitably chosen biomass is able to withstand the environment in the scrubber. It was also found that the activity of the biomass is not significantly impaired by the gypsum present in the scrubber.

The biomass is suitable for liberating nitrogen from nitrogen oxides. The noxious nitrogen oxides are converted into gaseous nitrogen which can be discharged from the scrubber and can directly, together with the clean gas, be discharged to atmosphere.

A further preferred embodiment of the method according to the invention is characterized in that use is made of an electron donor from the group consisting of hydrogen, ethanol, methanol or another organic compound.

A problem in scrubbing out nitrogen oxides is that NO, whose proportion in the total amount of nitrogen oxides is greatest, does not readily dissolve in water. The usually also present $NO_2$, which occurs in much lower concentration in the nitrogen oxides, dissolves readily in water. So that NO is also scrubbed out to a considerable degree, it is preferable for the agent to comprise a chelate bound to a metal, preferably a chelate of a transition element, more preferably a chelate of a transition metal such as a manganese chelate, iron chelate, cobalt chelate, nickel chelate. copper chelate or zinc chelate or a mixture of one or more of these chelates. It was found that a scrub liquor to which a chelate has been added has a high removal efficiency for NO.

**[0017]** A further preferred embodiment of the method according to the invention is characterized in that a transition metal chelate is formed with a chelate that has at least two pairs of free electrons available for complex forming with a metal, in the form of amino-, carboxyl-, hydroxyl-, phosphonate or sulphonate groups, or combinations thereof. Examples are polyamines, EDTA, HEDTA and NTA.

The overall chemical reactions when EDTA (ethylenediaminotetraacetic acid) is used proceed as follows:

- scrubbing out of $NO_2$:

$$NO_2(g) \rightarrow NO_2(l)$$

- scrubbing out of NO:

$$NO + Fe^{II} [EDTA]^{2-} \rightarrow Fe^{II} [EDTA]^{2-} NO$$

In addition, however, an undesirable side reaction takes place as a result of the oxygen present in the gas:

$$4Fe^{II}[EDTA]^{2-} + O_2 + 2H_2O \rightarrow 4Fe^{III} [EDTA]^- + 4OH^-$$

The $Fe^{III}[EDTA]^-$ chelate is not active in scrubbing out NO, so that the above-mentioned reaction reduces the quantity of active chelate and operational costs would therefore increase. It proved possible to reduce the oxydized iron chelate to the active iron chelate according to, for example, the chemical reaction:

$$12Fe^{III}[EDTA]^- + C_2H_5OH + 3H_2O \rightarrow 12Fe^{II}[EDTA]^{2-} + 2CO_2 + 12 H^+$$

if ethanol is used as the electron donor. Some other electron donor, such as methanol, hydrogen or fatty acids, can also be used. Undesirable side reactions which occur when a chelate is used are biologically reversible. This permits a significant reduction in the consumption of chelate.

The use of a biomass thus affords the particular advantage that the non-oxydized chelate is converted into the active iron-chelate, which results in considerable savings in operational costs.

The chemical reactions with other chelates can be deduced from the above description by the skilled person.

The denitrification process in the biomass proceeds as follows:

$$2NO + C_2H_5OH \rightarrow N_2\uparrow + 2CO_2 + 2H_2O$$

using ethanol as the electron donor. Here, too, it is possible to use some other electron donor such as mentioned above.

Particularly for removing sulphur oxides it is preferable for the agents to comprise a calcium compound which is suitable for binding the sulphur oxides. A suitable calcium compound is slaked or unslaked lime.

The scrub liquor absorbs the sulphur oxide present in the gas, in particular sulphur dioxide, to produce sulphurous acid in the aqueous phase. The sulphurous acid is converted by the calcium into calcium sulphite which, in the presence of oxygen in the gas, will oxidize further to calcium sulphate. All this proceeds in accordance with the following overall chemical reactions in the case of limestone being the calcium compound:

$$SO_2 + H_2O \rightarrow H_2SO_3$$

$$H_2SO_3 + CaCO_3 \rightarrow CaSO_3 + CO_2 + H_2O$$

$$CaSO_3 + \tfrac{1}{2} O_2 \rightarrow CaSO_4$$

Preferably, a portion of the scrub liquor, which is in the form of calcium sulphite- or calcium sulphate-containing slurry, is passed to a reaction vessel where the calcium sulphite, by means of oxygen being added, for example supplied in air, is converted into calcium sulphate. This embodiment is particularly advantageous if a chelate is used. If calcium sulphite were to be oxidized in the presence of chelate, for example in the scrubber, a portion of the active chelate would likewise be converted into the inactive oxydized chelate.

Another advantageous embodiment of the method according to the invention is characterized in that the agents comprise a sodium compound which is suitable for binding the sulphur oxides to form a sodium sulphur compound. This embodiment provides the advantage that the scrubber can be operated at a relatively low L/G ratio (liquid-gas ratio). An L/G which is lower by a factor 4 than in the case of a limestone-containing slurry as a scrub liquor is achievable. A suitable sodium compound is obtained if aqueous sodium hydroxide is added to the scrub liquor.

A more detailed embodiment of the method according to the invention is characterized in that at least a portion of the scrub liquor is discharged from the scrubber and is passed to a reactor in which at least a portion of the sodium sulphur compound present in the scrub liquor is converted, with the aid of a calcium-containing compound, into a calcium sulphur compound. With this method, the sodium sulphur compound is converted outside the scrubber into a calcium sulphur compound, usually gypsum. The biomass which is preferably sustained in the bottom section of the scrubber, will therefore not, or only to a limited extent owing to recirculation of scrub liquor, come into contact with the calcium sulphur compound. The activity of the biomass and the accretion of crystals of the calcium sulphur compound are separated and do not adversely affect one another.

The invention will be explained below with reference to the drawing in which two non-limiting embodiments are drawn of apparatuses suitable for implementing the method according to the invention.

In the drawing:

Figure 1 shows a first embodiment of an apparatus suitable for implementing the method according to the invention, and
Figure 2 shows a second embodiment of an apparatus suitable for implementing the method according to the invention.
Figure 3 is a third embodiment of an apparatus suitable for implementing the method according to the invention.

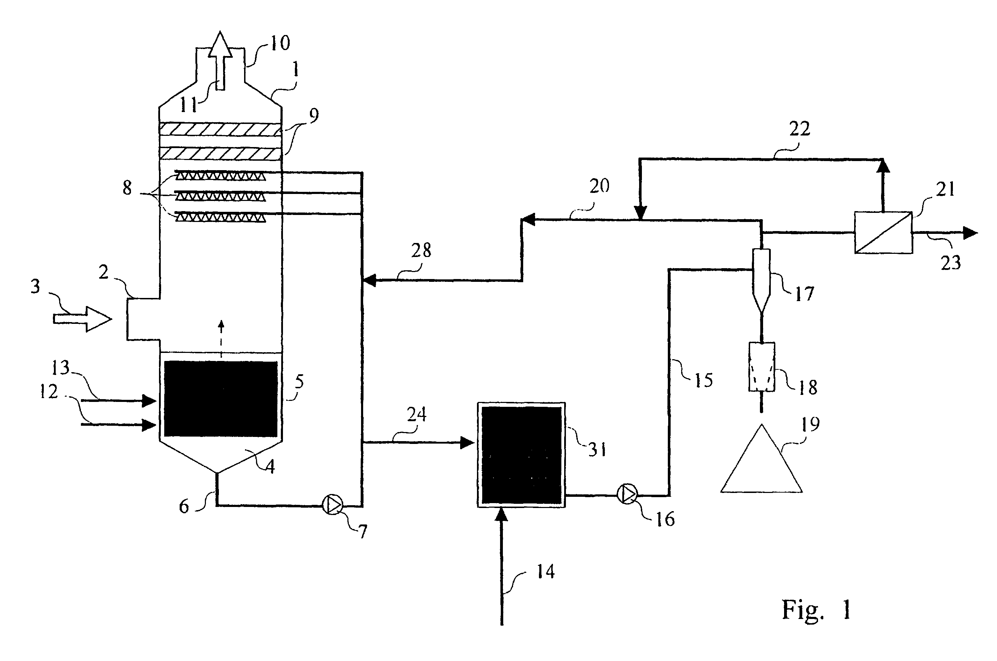

In Figure 1, 1 is a scrubber provided with a supply pipe 2 via which the gas to be cleaned is introduced into the scrubber in the direction indicated by the arrow 3. In the bottommost section 4 of the scrubber 1, which acts as a circulation tank, a parcel of biomass is present in circulation tank 5. Alternatively, a biomass can be used in the form of free cells which are recirculated together with the scrub liquor. Connected to the bottommost section 4 is a recirculation line 6 which incorporates a pump 7. The recirculation line 6 is connected to a row of spray bars 8.

Scrub liquor which, together with the biomass from circulation tank 5, is present in the bottom section of the scrubber, is passed by means of the pump 7 through the recirculation line 6 to the spray bars 8 and then falls in the form of droplets. If required, free cells forming the biomass can also be recirculated. En route the droplets come into contact with gas rising in the scrubber, the droplets absorbing sulphur oxide, in particular sulphur dioxide, and nitrogen compounds in the process.

The scrubbed gas passes the spray bar 8 and the demisters 9 and leaves the scrubber via discharge line 10 in the direction indicated by the arrow 11.

The scrub liquor is provided with agents for removing sulphur oxides, such as limestone, and with agents for removing nitrogen oxides, such as a chelate, preferably EDTA or NTA. For the purpose of replenishing the agents, the scrubber is provided with a first make-up line 12 for replenishing agents for removing sulphur oxide, and with a second make-up line 13 for replenishing agents for removing nitrogen oxide.

A portion of the scrub liquor flowing through the recirculation line 6 is drawn off via draw-off line 24 and is passed to a reaction 31. The reactor 31 is provided with a feed line 14 for supplying oxygen, preferably in the form of air, to the reactor 31. In reactor 31, the calcium sulphite from the scrub liquor is converted into calcium sulphate by the oxygen supplied. Preferably, this further oxidation is carried out outside the scrubber, to prevent or at least limit oxidation of the metal from the metal chelate.

The bottommost section 4 of the scrubber, the recirculation tank 5, is used not only as a bioreactor but also as a crystallizer. Calcium sulphite and calcium sulphate formed will, as a result of super-saturation, precipitate as crystals which will continue to accrete over the residence time. This further accretion is desirable in the context of subsequent dewatering of gypsum.

$$CaSO_3 + 2H_2O \rightarrow CaSO_3 \cdot 2H_2O$$

$$CaSO_4 + 2H_2O \rightarrow CaSO_4 \cdot 2H_2O.$$

Calcium sulphate, together with scrub liquor, is passed from the reactor 31 via transfer line 15, in which a pump 16 is incorporated, to a gypsum dewatering apparatus. This gypsum dewatering apparatus comprises a hydrocyclone 17 and a centrifuge 18. The dried gypsum 19 from the centrifuge 18 is stored in a storage space. Other gypsum dewatering apparatuses are also possible.

The overflow of the hydrocyclone 17 is partially recycled, via return line 20 and 28, into the scrubber 1. Some of the overflow must be discharged to keep the amount of scrub liquor at a suitable level. The overflow still contains chelate and cannot therefore be discharged directly. Moreover, from a cost point of view it is also beneficial to remove the chelate from the overflow. To this end, that portion of the overflow which is to be discharged is passed to a chelate separator 21. The chelate separator 21 can be in the form of a membrane filter or some other device suitable for this purpose. A chelate-containing stream from the chelate separator 21 is recycled, via line 22, to return line 20 and 28. That fraction of the portion to be discharged which has been stripped of chelate is discharged, via discharge line 23, to a sewer or a further processing installation.

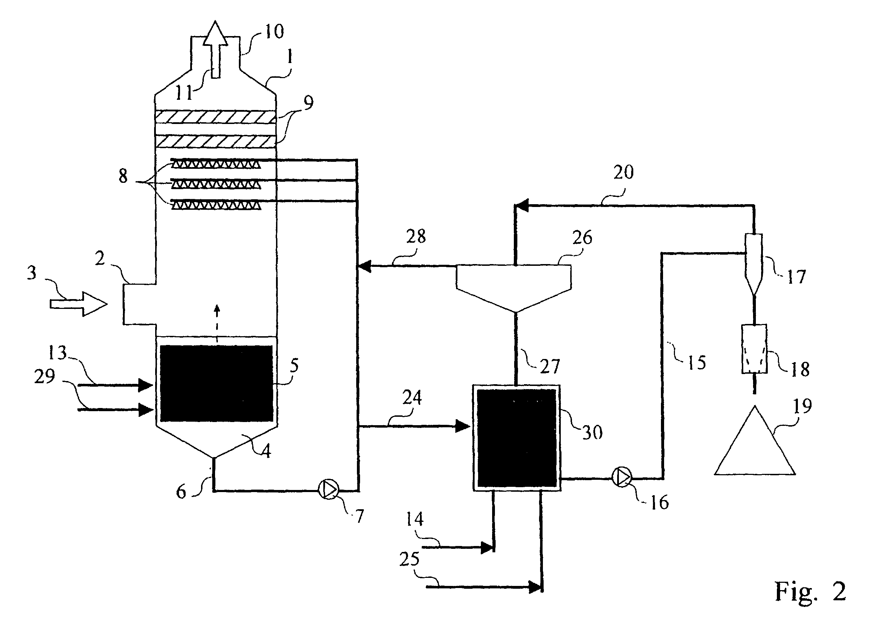

In Figure 2, elements with the same reference numerals as in Figure 1 have the same or analogous functions.

In Figure 2, a sodium-containing compound, preferably aqueous sodium hydroxide, is added to the scrub liquor via third make-up line 29. The sodium compound in the scrub liquor, in the course of precipitation from the spray bars 8 in the scrubber, combines with the sulphur oxide to form sodium sulphite and sodium sulphate. Scrub liquor containing sodium sulphite and sodium sulphate is passed to a reactor 30 via draw-off line 24. Reactor 30 is provided with a feed line 14 for supplying oxygen, for example in the form of air, and with a metering line 25 for supplying a calcium compound, for example in the form of a limestone-containing slurry. In reactor 30, sodium sulphite and sodium sulphate are converted into calcium sulphate which is dewatered and stored in the above-described manner.

To prevent a return flow from reactor 30 to scrubber 1 containing a large amount of fine particles, a thickener 26 is used in which fine particles are able to settle and are recycled to reactor 30 via line 27. The overflow of thickener 26 is recycled to the scrubber via line 28.

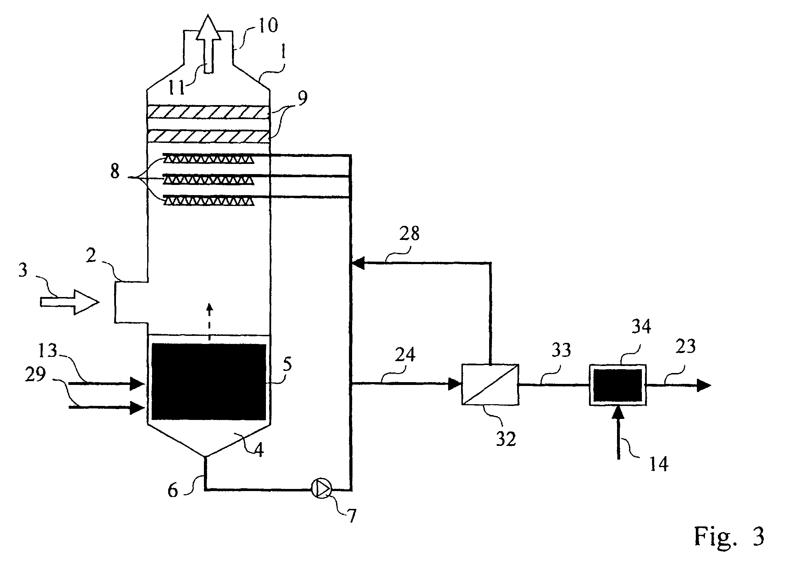

In Figure 3, elements with the same reference numeral as in Figure 1 and Figure 2 have the same or analogous functions.

In Figure 3, a sodium-containing compound, preferably aqueous sodium hydroxide, is again added to the scrub liquor via the third make-up line 29. A portion of the scrub liquor which is recirculated through line 6 and which contains sodium sulphite, sodium sulphate and chelate, is passed, via draw-off line 24, to a chelate separator 32, for example a membrane filter. The chelate-containing portion of the scrub liquor drawn off is recycled to the scrubber via line 28 and line 6. The sodium sulphite- and sodium sulphate-containing portion of the scrub liquor drawn off is passed to a reactor 34 via line 33. Via line 14, reactor 34 is supplied with oxygen which converts the sodium sulphite into sodium sulphate. Sodium sulphate-containing and scrub liquor containing fluid is discharged via discharge line 23. This embodiment has the advantage that, owing to the higher removal efficiency which can be achieved with the addition of a sodium compound such as aqueous sodium hydroxide, it is possible to operate at a lower L/G ratio.

**Claims**

1. Method for removing gaseous components from a gas, which involves the gas in a scrubber being brought into contact with a scrub liquid, **characterized in that** the scrub liquor is provided with agents for removing both most of the sulphur oxides present in the gas and most of the nitrogen oxides present in the gas from the gas, **in that** the agents comprise a calcium compound which is suitable for binding the sulphur oxides and/or a sodium compound which is suitable for binding the sulphur oxides to form a sodium sulphur compound, **in that** the scrub liquor being loaded with sulphur oxides and nitrogen oxides is at least partially stripped, in a biomass present in the scrubber, of nitrogen oxides, and **in that** the agents comprise a chelate bound to a metal, preferably Mn, Fe, Co, Ni, Cu, Zn.

2. Method according to claim 1, **characterized in that** at least a portion of the scrub liquor is discharged from the scrubber and is passed to a reactor in which at least a portion of the sodium sulphur compound present in the scrub liquor is converted, with the aid of a calcium-containing compound, into a calcium sulphur compound.

**3.** Method according to claim 1 or 2, **characterized in that** the biomass is suitable for liberating nitrogen from nitrogen oxides.

**4.** Method according to claim 3, **characterized in that** use is made of an electron donor from the group consisting of hydrogen, ethanol, methanol or another organic compound.

**5.** Method according to any of the preceding claims, **characterized in that** a transition metal chelate is formed with a chelate that has at least two pairs of free electrons available for complex forming with a metal, in the form of amino-, carboxyl-, hydroxyl-, phosphonate or sulphonate groups, or combinations thereof, for example polyamines, EDTA, HEDTA and NTA.

**6.** Method according to any of the preceding claims, **characterized in that** at least a portion of the scrub liquor is recirculated through a chelate separator.

**7.** Method according to claim 6, **characterized in that** as a chelate separator a membrane filter is used.

**Revendications**

**1.** Procédé pour éliminer d'un gaz des composants gazeux, impliquant la mise en contact du gaz avec un liquide de lavage dans un laveur, le liquide de lavage contenant des agents destinés à éliminer du gaz la plus grande partie des oxydes de soufre et la plupart des oxydes d'azote, les agents comprenant un composé du calcium et/ou un composé du sodium convenant à la liaison des oxydes de soufre, et un chélate métallique convenant à la liaison des oxydes d'azote, **caractérisé en ce que** le laveur contient une biomasse permettant de libérer l'azote des oxydes d'azote dans le liquide de lavage chargé d'oxydes de soufre et d'oxydes d'azote.

**2.** Procédé selon la revendication 1, dans lequel les agents comprennent un composé du sodium, **caractérisé en ce qu'**au moins une partie du liquide de lavage est envoyée du laveur à un réacteur dans lequel au moins une partie du composé du soufre et du sodium présents dans le liquide de lavage est convertie, à l'aide d'un composé contenant du calcium, en un composé du soufre et du calcium.

**3.** Procédé selon la revendication 1 ou 2, **caractérisé en ce que** le chélate métallique est un chélate de Mn, Fe, Co, Ni, Cu ou Zn.

**4.** Procédé selon l'une quelconque des revendications 1 à 3, **caractérisé en ce qu'**utilisation est faite d'un donneur d'électrons choisi dans l'ensemble comprenant l'hydrogène, l'éthanol, le méthanol et d'autres composés organiques.

**5.** Procédé selon l'une quelconque des revendications 1 à 4, caractérisé en ce le chélate métallique est formé à partir d'un métal de transition et d'un composé ayant au moins deux paires d'électrons libres disponibles pour la formation d'un complexe avec un métal, sous forme de groupes amino, carboxyles, hydroxyles, phosphonates ou sulfonates, ou leurs combinaisons, par exemple des polyamines, l'EDTA, le HEDTA et le NTA.

**6.** Procédé selon l'une quelconque des revendications 1 à 6, **caractérisé en ce qu'**au moins une partie du liquide de lavage est renvoyée en recirculation dans un séparateur de chélates.

**7.** Procédé selon la revendication 6, **caractérisé en ce qu'**on utilise en tant que séparateur de chélates une membrane filtrante.

**Patentansprüche**

**1.** Verfahren zum Entfernen von gasförmigen Bestandteilen aus einem Gas, welches das Inkontaktbringen des Gases mit einer Waschflüssigkeit in einem Scrubber umfasst, wobei die Waschlösung Mittel zum Entfernen des größten Teils der Schwefeloxide und des größten Teils der Stickoxide aus dem Gas umfasst, wobei die Mittel eine Calciumverbindung und/oder eine Natriumverbindung, welche zum Binden von Schwefeloxiden geeignet ist, und einen Metallchelatkomplex umfassen, welcher zum Binden von Stickoxiden geeignet ist, **dadurch gekennzeichnet, dass** der Scrubber eine Biomasse enthält, welche geeignet ist, Stickstoff aus Stickoxiden in der Waschflüssigkeit, welche mit Schweteloxiden und Stickoxiden beladen ist, freizusetzen.

2. Verfahren gemäß Anspruch 1, wobei die Mittel eine Natriumverbindung umfassen, **dadurch gekennzeichnet, dass** mindestens ein Teil der Waschflüssigkeit von dem Scrubber in einen Reaktor überführt wird, in dem mindestens ein Teil der Natrium-Schwefel-Verbindung, welche in der Waschflüssigkeit vorhanden ist, mit Hilfe einer Calcium-enthaltenden Verbindung in eine Calcium-Schwefel-Verbindung umgewandelt wird.

3. Verfahren gemäß Anspruch 1 oder 2, **dadurch gekennzeichnet, dass** der Metallchelatkomplex ein Chelatkomplex von Mn, Fe, Co, Ni, Cu oder Zn ist.

4. Verfahren gemäß einem der Ansprüche 1 bis 3, **dadurch gekennzeichnet, dass** eine Elektronen-Donor-Verbindung ausgewählt aus Wasserstoff, Ethanol, Methanol und anderen organischen Verbindungen verwendet wird.

5. Verfahren gemäß einem der Ansprüche 1 bis 4, **dadurch gekennzeichnet, dass** der Metallchelatkomplex aus einem Übergangsmetall und einer Verbindung gebildet wird, welche mindestens zwei freie Elektronpaare aufweist, welche zur Komplexbildung mit einem Metall, in der Form von Amino-, Carboxyl-, Hydroxyl-, Phosphonat- oder Sulphonatgruppen oder Kombinationen davon, beispielsweise Polyamine, EDTA, HEDTA und NTA, zur Verfügung stehen.

6. Verfahren gemäß einem der Ansprüche 1 bis 6, **dadurch gekennzeichnet, dass** mindestens ein Teil der Waschlösung durch eine Chelat-Abscheidevorrichtung dem Kreislauf wieder zugeführt wird.

7. Verfahren gemäß Anspruch 6, **dadurch gekennzeichnet, dass** als Chelat-Abscheidevorrichtung ein Membranfilter verwendet wird.

Fig. 1

Fig. 2

EP 1 107 819 B1

EP 1 107 819 B1

Fig. 3